# EUROPEAN PATENT SPECIFICATION

(11) **EP 2 599 643 B1**
(45) Date of publication and mention of the grant of the patent: **11.11.2015**
(21) Application number: 11191096.4
(22) Date of filing: 29.11.2011
(51) Int. Cl.: B60B 27/02, F16D 41/36, F16D 27/01

(54) **Ratchet hub**
Nabe mit Sperrklinken
Moyeu à cliquet

(43) Date of publication of application: 05.06.2013
(73) Proprietor: VP Components Co., Ltd., Taichung City 43865 (TW)
(72) Inventor: Lin, Wen-Hwa, 43865 Taichung City (TW)
(74) Representative: Viering, Jentschura & Partner Patent- und Rechtsanwälte

(56) References cited:
- DE-U1- 29 803 667
- US-A- 6 123 179
- US-A1- 2008 006 500
- US-A1- 2009 255 774

## Description

### BACKGROUND OF THE INVENTION

### 1. Technical Field

The present invention relates to a ratchet hub according to the preamble of Claim 1. Accordingly, the present invention severally relates to bicycle parts, and more particularly, to a ratchet hub that uses a magnetic force to restore its unidirectional ratchet mechanism.

### 2. Description of Related Art

Conventionally, a rear hub of a bicycle implements a spring as a power source for restoring its unidirectional ratchet device. While the prior art uses a return spring that provides resilience large enough to restore the ratchet block, it suffers relatively large operational resistance. In addition, after long-term use, the spring tends to exhibit elastic fatigue that retards the unidirectional ratchet device from rapidly resorting to drive the hub.

On the other hand, the closest prior art document Taiwan Patent No. M330208 (corresponding to US 2009/0255774) has disclosed a hub ratchet device that includes a sleeve, a ratchet block, a ratchet ring being next to a freewheel device and more than one permanent magnets deposited on the ratchet block at an end distant from the freewheel device. The prior-art device employs the magnetic attraction generated among the permanent magnet, the ratchet block and the sleeve to restore the ratchet block, so that the ratchet ring and the freewheel device provide unidirectional transmission with reduced resistance and without the problem of elastic fatigue.

The prior-art device thus must have its ratchet block and sleeve made of magnetically permeable metal. Moreover, the ratchet block has to be such processed that one end thereof is formed with annularly arranged teeth for engaging the sleeve and that its surface interfacing sleeve limits rotation of the sleeve. In the event that the ratchet block and the sleeve are directly made by processing magnetically permeable metal, their magnetism is likely to reduce or lose due to cutting, high heat and/or impact during their processing. In the event that the ratchet block and the sleeve are first shaped and then magnetized, additional processing procedures are required and therefore the manufacturing cost is increased. Besides, since the shaped ratchet block and the sleeve are uneven in surface, the magnetization may be ineffective.

Moreover, because most components of the prior-art device, particularly the freewheel device, are made of magnetically permeable metal, when the ratchet block has its annularly arranged teeth engaging with the freewheel device, the magnetism of the ratchet block further strengthen the combination, and causes the ratchet block to be inseparable from the freewheel device, thereby hindering the reverse rotation of the ratchet device. The magnetism of the ratchet block also tends to attract foreign iron dust that causes addition wear to the components of the device.

### SUMMARY OF THE INVENTION

In view of the need for a ratchet hub that features for automatic and prompt restoration without mechanical jam, the present invention provides a ratchet hub according to claim 1. Further embodiments of the invention are described in the dependent claims.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
**Figure 1** is a perspective view of a ratchet hub according to the present invention;
**Figure 2** is an exploded view of the ratchet hub according to the present invention;
**Figure 3** is a cross-sectional view of the ratchet hub according to the present invention;
**Figure 4** is a partially enlarged view of the part circled in **Figure 3****;** and
**Figure 5** and **Figure 6** are partial, cross-sectional views of the ratchet hub according to the present invention illustrating its operation.

### DETAILED DESCRIPTION OF THE INVENTION

According to the present invention, a ratchet hub using a magnetically repulsive force for restoration has a freewheel unit and ratchet ring thereof forming a unidirectional ratchet mechanism and a magnetic assembly using a magnetically repulsive force to normally make the freewheel unit and ratchet ring engage mutually and allow force transmission therebetween. Once a force disengaging the freewheel unit from the ratchet ring surpasses the magnetically repulsive force, a second circular toothed surface is pushed away from the freewheel unit. The second circular toothed surface can automatically return to engage with the freewheel unit when the force disengaging the freewheel unit from the ratchet ring disappears.

The following one or more preferred embodiments when read with the accompanying drawings are made to clearly exhibit the above-mentioned and other technical contents, features and effects of the present invention. Through the exposition by means of the specific embodiments, people would further understand the technical means and effects the present invention adopts to achieve the above-indicated objectives. However, the accompanying drawings are intended for reference and illustration, but not to limit the present invention and are not made to scale.

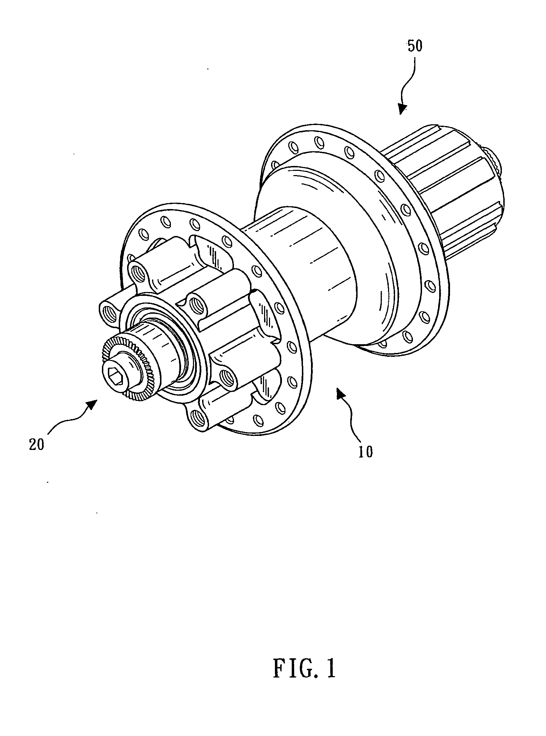

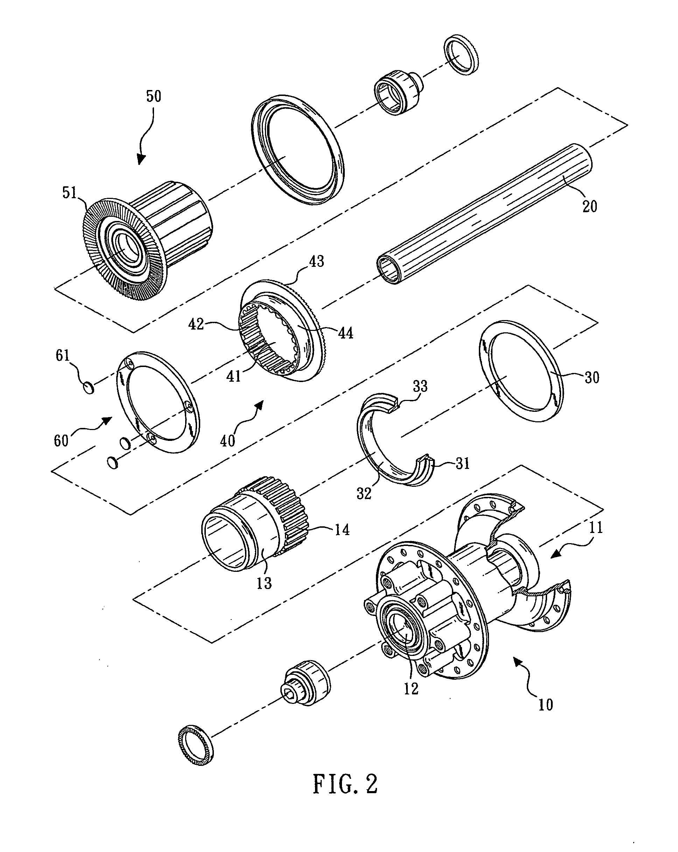

In one embodiment of the present, a ratchet hub is as shown in **Figure 1** through **Figure 4****.**

The ratchet hub includes a hub body **10** having one end formed with an open-end ratchet shell **11,** and a shaft hole **12** passing axially through the hub body **10.** The shaft hole **12** at the open end of the ratchet shell **11** receives a sliding sleeve **13.** The sliding sleeve **13** has its outer periphery formed with a plurality of axial grooves **14.**

The ratchet hub includes also a shaft **20** such passes through the shaft hole **12** and the sliding sleeve **13** that the hub body **10** is rotatable about the shaft **20.**

The ratchet hub further includes a magnetic part **30,** in the present embodiment, formed as a magnetic ring (hereinafter referred to as the magnetic ring **30)** and fixed to the ratchet shell **11** such that a positioning ring **31** is held between the ratchet shell **11** and the magnetic ring **30.** The positioning ring **31** defines a central hole **32** by which the positioning ring **31** is mounted around the sliding sleeve **13.** The positioning ring **31** has a positioning rim **33** extending axially and circling the central hole **32.** The positioning rim **33** helps the positioning ring **31** to engage with the magnetic ring **30.** The positioning ring **31** is made of an elastic material, such that it can position itself with respect to the inner surface of the ratchet shell **11.**

The ratchet hub essentially includes a ratchet ring **40** centrally defining a through hole **41.** The ratchet ring **40** has its inner periphery formed with a plurality of sliding teeth **42** circling the through hole **41.** These sliding teeth **42** are configured to engage the axial grooves **14,** so that the ratchet ring **40** can combine with the sliding sleeve **13** with the magnetic ring **30** sandwiched therebetween in the manner that the ratchet ring **40** is axially slidable yet non-rotatable with respect to the sliding sleeve **13.** The ratchet ring **40** has its one surface opposite to the other surface that faces the magnetic ring **30** formed as a second circular toothed surface **43.** Moreover, a connecting portion **44** extends from the surface of the ratchet ring **40** facing the magnetic ring **30.**

The disclosed ratchet hub also has a freewheel unit **50** that is rotatably mounted around the shaft **20** and has a first circular toothed surface **51** facing and configured to engage and form a unidirectional ratchet mechanism with the second circular toothed surface **43** on the ratchet ring **40.**

Another magnetic part **60,** in the present embodiment, formed as a pushing ring (hereinafter referred to as the pushing ring **60**) is fixedly mounted around the connecting portion **44** of the ratchet ring **40,** such that the pushing ring **60** is sandwiched between the magnetic ring **30** and the ratchet ring **40.** The pushing ring **60** is embedded with a plurality of magnetic members **61.** These magnetic members **61** and the magnetic ring **30** are such arranged that they face each other with the same magnetic pole. Thereby, there is normally a magnetically repulsive force existing between the pushing ring **60** and the magnetic ring **30** and makes the second circular toothed surface **43** and the first circular toothed surface **51** engage with each other normally.

A plurality of bearings **70** are deposited between the shaft **20** and the hub body **10,** and between the shaft **20** and the freewheel unit **50,** respectively, so as to ensure smooth rotation of the shaft **20** with respect to the hub body **10,** and the freewheel unit **50,** respectively.

Therein, one or both of the ratchet ring **40** and the freewheel unit **50** is made of a non-magnetically permeable material.

With the configuration described above, the following detailed description will be directed to the operation of the present invention.

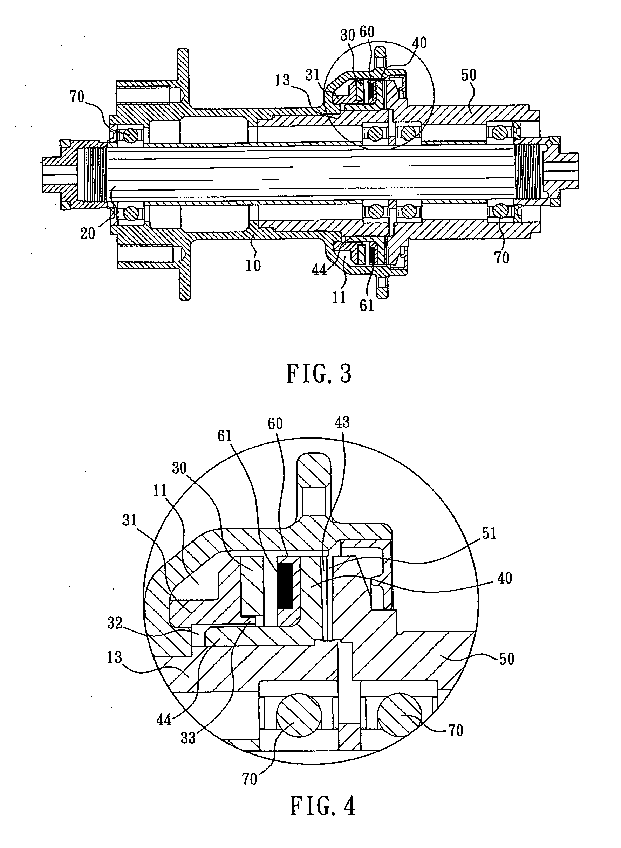

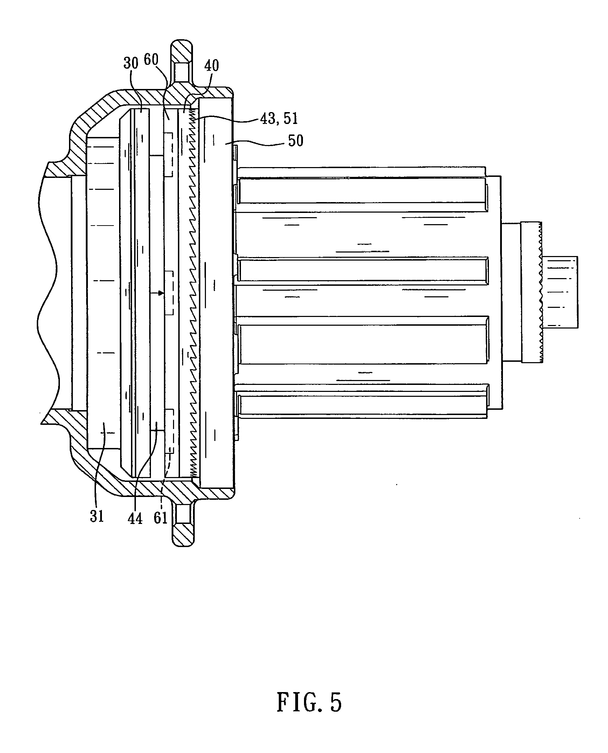

Referring to **Figure 5** together with **Figure 3****,** the present invention implements the magnetically repulsive force existing between the pushing ring **60** and the magnetic ring **30** to make the second circular toothed surface **43** and the first circular toothed surface **51** engage with each other normally. When the freewheel unit **50** rotates forward, or along a first direction (as happening when a cyclist pedals the bicycle having the disclosed ratchet hub forward), the ratchet ring **40** is at an engaged position on the sliding sleeve **13,** where the second circular toothed surface **43** and the first circular toothed surface **51** engage with each other, so that the freewheel unit **50** drives the ratchet ring **40,** the sliding sleeve **13** and the hub body **10** successively, making the hub body **10** to rotate about the shaft **20.**

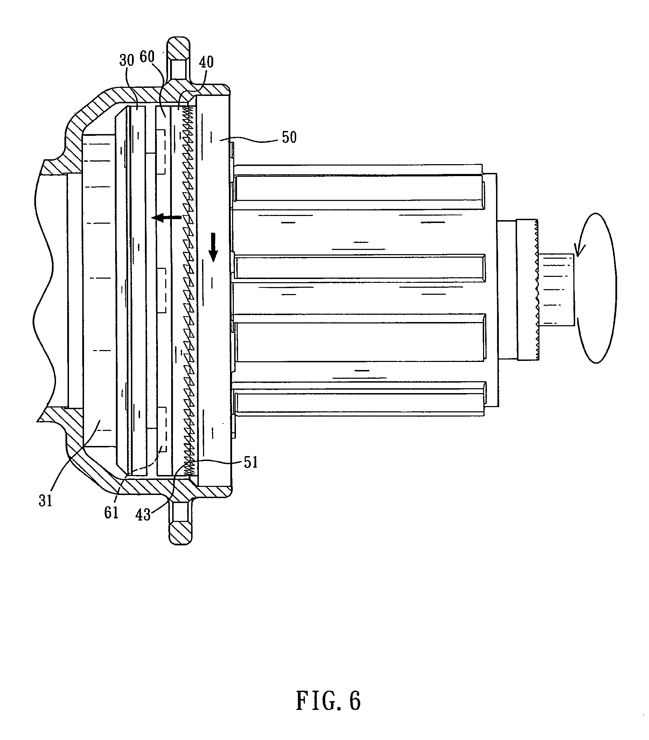

As shown in **Figure 6** together with **Figure 3****,** when the freewheel unit **50** rotates reversely, or along a second direction, since the second circular toothed surface **43** and the first circular toothed surface **51** jointly form the unidirectional ratchet mechanism, a pushing force is generated and acts on the ratchet ring **40.** Once the pushing force surpasses the magnetically repulsive force existing between the pushing ring **60** and the magnetic ring **30,** the ratchet ring **40** is pushed to move along the sliding sleeve **13** toward its disengaged position where the second circular toothed surface **43** separates from the first circular toothed surface **51,** making the freewheel unit **50** run without driving the ratchet ring **40,** the sliding sleeve **13** and the hub body **10.** When the freewheel unit **50** rotates forward again and thus the pushing force no more exists, the magnetically repulsive force between the pushing ring **60** and the magnetic ring **30** can immediately, automatically restore the ratchet ring **40** to the engaged position, so the restoration is accomplished rapidly.

The present invention uses the magnetically repulsive force normally existing between the pushing ring **60** and the magnetic ring **30** as the power source for the restoration of the ratchet ring **40** with respect to the freewheel unit **50,** so it advantageously exhibits the rapid restoration and reduces mechanical resistance that otherwise would seriously happen in the prior-art device. Furthermore, the magnetic ring **30** and the magnetic members **61** are substantively permanent magnets, whose magnetism lasts without degradation even after long-term use. Thus, the present invention, compared with the traditional spring-based device that could suffer elastic fatigue, is more durable and has longer service life.

In addition, since one or both of the ratchet ring **40** and the freewheel unit **50** is made of a non-magnetically permeable material, when approached by the magnetic members **61,** they will not cause the second circular toothed surface **43** and the first circular toothed surface **51** to be inseparable from each other due to magnetic attraction. This design not only ensures the normal operation of the ratchet hub, but also prevents foreign matters such as iron dust from being attracted into the interior of the hub and wearing the components of the hub.

## Claims

1. A ratchet unit comprising:
a freewheel unit (50) being configured to rotate along a first rotational direction or
a second rotational direction when receiving a driving power, and having a first circular toothed surface (51);
a ratchet ring (40) having a second circular toothed surface (43) configured to engage with the first circular toothed surface (51) of the freewheel unit (50), wherein the first circular toothed surface (51) and the second circular toothed surface (43) form a unidirectional ratchet mechanism, such that when the freewheel unit (50) rotate along the first rotational direction, the first circular toothed surface (51) and the second circular toothed surface (43) engage with each other and allow force transmission therebetween, and when the freewheel unit (50) rotates along the second rotational direction, the first circular toothed surface (51) and the second circular toothed surface (43) disengage from each other and disallow force transmission therebetween;
a sliding sleeve (13) being telescoped with the ratchet ring (40) in a manner that the sliding sleeve (13) and the ratchet ring (40) are axially slidable yet non-rotatable with respect to each other, such that the ratchet ring (40) is allowed to slide axially against the sliding sleeve (13) between an engaged position and a disengaged position, wherein when the ratchet ring (40) is at the engaged position, the first circular toothed surface (51) and the second circular toothed surface (43) engage with each other, and when the ratchet ring (40) is at the disengaged position, the first circular toothed surface (51) and the second circular toothed surface (43) disengage from each other;
a magnetic assembly including a first magnetic part (60) fixed to the ratchet ring (40),
being **characterized in**:
the magnetic assembly further comprising a second magnetic part (30) fixed to a hub body (10), wherein the first and second magnetic parts (60)(30) face each other with an identical magnetic pole, such that a repulsive force normally exists therebetween and makes the ratchet ring (40) normally stay at the engaged position, wherein when the freewheel unit (50) rotates along the second rotational direction, a force disengaging the first circular toothed surface (51) from the second circular toothed surface (43) surpasses the repulsive force and pushes the ratchet ring (40) toward the disengaged position.

2. The ratchet hub of Claim 1, being **characterized in**:
the hub body (10) having a shaft hole (12) passing axially therethrough, and the sliding sleeve (13) having an outer periphery thereof formed with a plurality of axial grooves (14);
a shaft (20) such passing through the shaft hole (12) and the sliding sleeve (13) that the hub body (10) is allowed to rotate about the shaft (20);
the second magnetic part (30) of the magnetic assembly comprising a magnetic ring being fixed to a ratchet shell (11);
the ratchet ring (40) centrally defining a through hole (41), the ratchet ring (40) having an inner periphery thereof formed with a plurality of sliding teeth (42) circling the through hole (41), the sliding teeth (42) being configured to engage with the axial grooves (14), so that the sliding sleeve (13) and the ratchet ring (40) are such telescoped that the sliding sleeve (13) and the ratchet ring (40) are axially slidable yet non-rotatable with respect to each other; and
the first magnetic part (60) of the magnetic assembly comprising a pushing ring located between the magnetic ring (30) and the ratchet ring (40), wherein the pushing ring is made magnetic by a plurality of magnetic members (61) inlaid thereto, in which each said magnetic member (61) and the magnetic ring (30) face each other with the identical magnetic pole.

3. The ratchet hub of claim 1 or 2, being **characterized in** further comprising a connecting portion (44) extending axially from the ratchet ring (40) toward the magnetic ring (30) for the pushing ring (60) to be mounted therearound.

4. The ratchet hub of Claim 2, being **characterized in** further comprising a positioning ring (31) that has a central hole (32) by which the positioning ring (31) is such mounted around the sliding sleeve (13) that the positioning ring (31) is located between the magnetic ring (30) and the hub body (10).

5. The ratchet hub of Claim 4, being **characterized in that** the positioning ring (31) has a positioning rim (33) extending axially and circling the central hole (32) for helping the positioning ring (31) to engage with the magnetic ring (30).

6. The ratchet hub of Claim 4, being **characterized in that** the positioning ring (31) is made of an elastic material, so that the positioning ring (31) is self positioned on an inner wall of the ratchet shell (11).

7. The ratchet hub of Claim 1, being **characterized in that** the ratchet ring (40) is made of a non-magnetically permeable material.

8. The ratchet hub of Claim 1, being **characterized in that** the freewheel unit (50) is made of a non-magnetically permeable material.

9. The ratchet hub of Claim 2, being **characterized in** further comprising at least one bearing (70) deposited between the shaft (20) and the hub body (10).

10. The ratchet hub of Claim 2, being **characterized in** further comprising at least one bearing (70) deposited between the shaft (20) and the freewheel unit (50).

## Patentansprüche

1. Eine Ratscheneinheit aufweisend:
eine Freilaufeinheit (50), die ausgebildet ist, entlang einer ersten Rotationsrichtung oder entlang einer zweiten Rotationsrichtung zu rotieren, wenn sie eine Antriebskraft empfängt, und die eine erste kreisförmige, gezahnte Fläche (51) aufweist;
einen Ratschenring (40), der eine zweite kreisförmige, gezahnte Fläche (43) aufweist, die ausgebildet ist, um mit der ersten kreisförmigen, gezahnten Fläche (51) in Eingriff zu sein, wobei die erste kreisförmige, gezahnte Fläche (51) und die zweite kreisförmige, gezahnte Fläche (43) einen unidirektionalen Ratschenmechanismus bilden, sodass, wenn die Freilaufeinheit (50) entlang der ersten Rotationsrichtung rotiert, die erste kreisförmige, gezahnte Fläche (51) und die zweite kreisförmige, gezahnte Fläche (43) miteinander in Eingriff sind und eine Kraftübertragung untereinander erlauben und, wenn die Freilaufeinheit (50) entlang der zweiten Rotationsrichtung rotiert, die erste kreisförmige, gezahnte Fläche (51) und die zweite kreisförmige, gezahnte Fläche (43) voneinander gelöst sind und keine Kraftübertragung untereinander erlauben;
eine Schiebemuffe (13), welche mit dem Ratschenring (40) in einer Weise ineinandergeschoben ist, sodass die Schiebemuffe (13) und der Ratschenring (40) axial verschiebbar sind, jedoch nicht in Bezug zueinander rotieren können, sodass der Ratschenring (40) gegen die Schiebemuffe (13) zwischen einer In-Eingriff-Stellung und einer gelösten Stellung axial verschiebbar ist, wobei, wenn sich der Ratschenring (40) in der In-Eingriff-Stellung befindet, die erste kreisförmige, gezahnte Fläche (51) und die zweite kreisförmige, gezahnte Fläche miteinander in Eingriff sind, und wenn sich der Ratschenring (40) in der gelösten Stellung befindet, die erste kreisförmige, gezahnte Fläche (51) und die zweite kreisförmige, gezahnte Fläche (43) voneinander gelöst sind;
eine magnetische Einrichtung, die einen ersten magnetischen Teil (60) aufweist, der an dem Ratschenring (40) befestigt ist,
**dadurch gekennzeichnet, dass**
die magnetische Einrichtung ferner einen zweiten magnetischen Teil (30) aufweist, welcher an einem Nabenkörper (10) befestigt ist, wobei der erste und der zweite magnetische Teil (60), (30) mit einem identischen magnetischen Pol einander zugewandt sind, sodass zwischen ihnen normalerweise ein Abstoßungskraft existiert, die den Ratschenring (40) normalerweise in der In-Eingriff-Stellung verbleiben lässt, wobei, wenn die Freilaufeinheit (50) entlang der zweiten Rotationsrichtung rotiert, eine Kraft, die die erste kreisförmige, gezahnte Fläche (51) von der zweiten kreisförmigen, gezahnten Fläche (43) löst, größer ist als die Abstoßungskraft, und den Ratschenring (40) zu der gelösten Stellung hin drückt.

2. Ratschen-Nabe gemäß Anspruch 1, **dadurch gekennzeichnet, dass**
der Nabenkörper (10) ein Wellenloch (12) aufweist, welches ihn axial durchläuft, und die Schiebemuffe (13) einen Außenumfang aufweist, der mit einer Mehrzahl von axialen Nuten (14) gebildet ist;
eine Welle (20) durch das Wellenloch (12) und die Schiebemuffe (13) verläuft, sodass der Nabenkörper (10) um die Welle (20) rotieren kann;
der zweite magnetische Teil (30) der magnetischen Einrichtung einen magnetischen Ring aufweist, welcher an einer Ratschen-Hülse (11) befestigt ist;
der Ratschenring (40) zentral ein Durchgangsloch (41) definiert, wobei der Ratschenring (40) einen Innenumfang aufweist, der mit einer Mehrzahl von Schiebezähnen (42) gebildet ist, welche das Durchgangsloch (41) umgeben, wobei die Schiebezähne (42) ausgebildet sind, um mit den axialen Nuten (14) in Eingriff zu sein, sodass die Schiebemuffe (13) und der Ratschenring (40) so ineinandergeschoben sind, dass die Schiebemuffe (13) und der Ratschenring (40) axial verschiebbar sind, jedoch nicht in Bezug zueinander rotieren können; und
der erste magnetische Teil (60) der magnetischen Einrichtung einen Drückring aufweist, der zwischen dem magnetischen Ring (30) und dem Ratschenring (40) angeordnet ist, wobei der Drückring durch eine Mehrzahl von in diesen eingelegten magnetischen Elementen (61) magnetisiert ist, wobei die magnetischen Elemente (61) und der magnetische Ring (30) mit identischen magnetischen Polen einander zugewandt sind.

3. Ratschen-Nabe gemäß Anspruch 1 oder 2, **gekennzeichnet dadurch, dass** die Ratschen-Nabe ferner einen Verbindungsbereich (44) aufweist, welcher sich axial von dem Ratschenring (40) zu dem magnetischen Ring (30) erstreckt, sodass der Drückring (60) um diesen angebracht ist.

4. Ratschen-Nabe gemäß Anspruch 2, **gekennzeichnet dadurch, dass** die Ratschen-Nabe ferner einen Positionierungsring (31) aufweist, der ein zentrales Loch (32) aufweist, durch das der Positionierungsring (31) um die Schiebemuffe (13) angebracht ist, sodass der Positionierungsring (31) zwischen dem magnetischen Ring (30) und dem Nabenkörper (10) angeordnet ist.

5. Ratschen-Nabe gemäß Anspruch 4, **gekennzeichnet dadurch, dass** der Positionierungsring (31) einen Positionierungsrand (33) aufweist, der sich axial erstreckt und das zentrale Loch (32) umgibt, um dem Positionierungsring (31) dabei zu helfen, mit dem magnetischen Ring (30) in Eingriff zu kommen.

6. Ratschen-Nabe gemäß Anspruch 4, **gekennzeichnet dadurch, dass** der Positionierungsring (31) aus einem elastischen Material gemacht ist, sodass der Positionierungsring (31) an einer Innenwand der Ratschen-Hülse (11) selbst-positionierend ist.

7. Ratschen-Nabe gemäß Anspruch 1, **gekennzeichnet dadurch, dass** der Ratschenring (40) aus einem nicht-magnetisch-permeablen Material gemacht ist.

8. Ratschen-Nabe gemäß Anspruch 1, **dadurch gekennzeichnet, dass** die Freilaufeinheit (50) aus einem nicht-magnetisch-permeablen Material gemacht ist.

9. Ratschen-Nabe gemäß Anspruch 2, **dadurch gekennzeichnet, dass** die Ratschen-Nabe ferner mindestens ein Lager (70) aufweist, welches zwischen der Welle (20) und dem Nabenkörper (10) angeordnet ist.

10. Ratschen-Nabe gemäß Anspruch 2, **dadurch gekennzeichnet, dass** die Ratschen-Nabe ferner mindestens ein Lager (70) aufweist, welches zwischen der Welle (20) und der Freilaufeinheit (50) angeordnet ist.

## Revendications

1. Unité de cliquet comprenant :
une unité roue libre (50) configurée pour tourner selon un premier sens de rotation ou un second sens de rotation lorsqu'elle reçoit une puissance d'entraînement, et ayant une première surface circulaire dentée (51) ;
une bague à cliquet (40) ayant une seconde surface circulaire dentée (43) configurée pour s'engager avec la première surface circulaire dentée (51) de l'unité roue libre (50), la première surface circulaire dentée (51) et la seconde surface circulaire dentée (43) formant un mécanisme de cliquet unidirectionnel, de telle sorte que, lorsque l'unité roue libre (50) tourne selon le premier sens de rotation, la première surface circulaire dentée (51) et la seconde surface circulaire dentée (43) s'engagent l'une avec l'autre et autorisent une transmission de force entre elles et, lorsque l'unité roue libre (50) tourne selon le second sens de rotation, la première surface circulaire dentée (51) et la seconde surface circulaire dentée (43) se désengagent l'une de l'autre et interdisent une transmission de force entre elles ;
un manchon coulissant (13) qui est télescopique par rapport à la bague à cliquet (40) de telle manière que le manchon coulissant (13) et la bague à cliquet (40) sont aptes à coulisser axialement mais de façon non-rotative l'un par rapport à l'autre, de telle sorte que la bague à cliquet (40) est autorisée à coulisser axialement contre le manchon coulissant (13) entre une position engagée et une position désengagée, lorsque la bague à cliquet (40) est dans la position engagée la première surface circulaire dentée (51) et la seconde surface circulaire dentée (43) s'engagent l'une avec l'autre et, lorsque la bague à cliquet (40) est dans la position désengagée, la première surface circulaire dentée (51) et la seconde surface circulaire dentée (43) se désengagent l'une de l'autre ;
un ensemble magnétique comprenant une première partie magnétique (60) fixée à la bague à cliquet (40),
**caractérisée par le fait que** :
l'ensemble magnétique comprenant en outre une seconde partie magnétique (30) fixée à un corps de moyeu (10), les première et seconde parties magnétiques (60) (30) se faisant face l'une l'autre avec un pôle magnétique identique, de telle sorte qu'une force de répulsion existe normalement entre elles et amène la bague à cliquet (40) à rester normalement dans la position engagée, lorsque l'unité de roue libre (50) tourne selon le second sens de rotation une force désengageant la première surface circulaire dentée (51) de la seconde surface circulaire dentée (43) dépassant la force de répulsion et poussant la bague à cliquet (40) vers la position désengagée.

2. Moyeu à cliquet selon la revendication 1, **caractérisé par le fait que** :
le corps de moyeu (10) ayant un trou d'arbre (12) passant axialement à travers celui-ci, et le manchon coulissant (13) ayant une périphérie extérieure de celui-ci formée avec une pluralité de rainures axiales (14) ;
un arbre (20) passant à travers le trou d'arbre (12) et le manchon coulissant (13) de telle sorte que le corps de moyeu (10) est autorisé à tourner autour de l'arbre (20) ;
la seconde partie magnétique (30) de l'ensemble magnétique comprenant une bague magnétique fixée à une enveloppe à cliquet (11) ;
la bague à cliquet (40) définissant de manière centrale un trou traversant (41), la bague à cliquet (40) ayant une périphérie intérieure de celle-ci formée avec une pluralité de dents coulissantes (42) encerclant le trou traversant (41), les dents coulissantes (42) étant configurées pour s'engager avec les rainures axiales (14), de telle sorte que le manchon coulissant (13) et la bague à cliquet (40) sont télescopiques de sorte que le manchon coulissant (13) et la bague à cliquet (40) sont aptes à coulisser axialement mais de façon non-rotative l'un par rapport à l'autre ; et
la première partie magnétique (60) de l'ensemble magnétique comprenant une bague de poussée située entre la bague magnétique (30) et la bague à cliquet (40), la bague de poussée étant rendue magnétique par une pluralité d'éléments magnétiques (61) encastrés dans celle-ci, dans laquelle chaque élément magnétique (61) et la bague magnétique (30) se font face l'un l'autre avec le pôle magnétique identique.

3. Moyeu à cliquet selon la revendication 1 ou 2, **caractérisé par le fait qu'**il comprend en outre une partie de liaison (44) s'étendant axialement de la bague à cliquet (40) vers la bague magnétique (30) pour que la bague de poussée (60) soit montée autour de celle-ci.

4. Moyeu à cliquet selon la revendication 2, **caractérisé par le fait qu'**il comprend en outre une bague de positionnement (31) qui a un trou central (32) au moyen duquel la bague de positionnement (31) est montée autour du manchon coulissant (13) de telle sorte que la bague de positionnement (31) est située entre la bague magnétique (30) et le corps de moyeu (10).

5. Moyeu à cliquet selon la revendication 4, **caractérisé par le fait que** la bague de positionnement (31) a un rebord de positionnement (33) s'étendant axialement et encerclant le trou central (32) pour aider la bague de positionnement (31) à s'engager avec la bague magnétique (30).

6. Moyeu à cliquet selon la revendication 4, **caractérisé par le fait que** la bague de positionnement (31) est fait d'un matériau élastique, de telle sorte que la bague de positionnement (31) se positionne elle-même sur une paroi interne de l'enveloppe à cliquet (11).

7. Moyeu à cliquet selon la revendication 1, **caractérisé par le fait que** la bague à cliquet (40) est faite d'un matériau perméable non-magnétique.

8. Moyeu à cliquet selon la revendication 1, **caractérisé par le fait que** l'unité roue libre (50) est faite d'un matériau perméable non-magnétique.

9. Moyeu à cliquet selon la revendication 2, **caractérisé par le fait qu'**il comprend en outre au moins un palier (70) disposé entre l'arbre (20) et le corps de moyeu (10).

10. Moyeu à cliquet selon la revendication 2, **caractérisé par le fait qu'**il comprend en outre au moins un palier (70) disposé entre l'arbre (20) et l'unité roue libre (50).
